# EUROPÄISCHE PATENTANMELDUNG

(11) **EP 0 527 531 A1**
(43) Veröffentlichungstag der Anmeldung: **17.02.1993**
(21) Anmeldenummer: 92202378.3
(22) Anmeldetag: 31.07.1992
(51) Int. Cl.: H04L 12/40, H04L 29/02

(54) **Verfahren zur Datenübertragung sowie Station zur Durchführung des Verfahrens**

(30) Priorität: 10.08.1991 DE 4126538
(71) Anmelder: Philips Patentverwaltung GmbH, 22335 Hamburg (DE); Philips Electronics N.V., 5621 BA Eindhoven (NL)
(72) Erfinder: von Vignau, Ralph, W-2000 Hamburg 1 (DE); Nowak, Alexander, W-2000 Hamburg 1 (DE); Bensch, Uwe, W-2000 Hamburg 1 (DE)
(74) Vertreter: von Laue, Hanns-Ulrich, Dipl.-Ing.

(57) **Zusammenfassung**

Bei einem Verfahren zur Übertragung von Daten zwischen zwei Stationen über einen Datenbus, an den mehrere Stationen parallel angeschlossen sind, deren Signale über eine ODER-Funktion auf dem Datenbus verknüpft sind, und der wenigstens zwei Datenleitungen aufweist, wobei wenigstens eine der Stationen als Master-Station und die übrigen Stationen als Slave-Stationen ausgelegt sind, welches insbesondere geeignet sein soll, möglichst große Datenmengen zu übertragen, ist vorgesehen, daß zwecks Start einer Datenübertragung eine Master-Station eine Slave-Station adressiert und an die Slave-Station zwei Steuerbits sendet, welche die Übertragungsrichtung und die Datenart einer nachfolgenden Datenübertragung zwischen diesen beiden Stationen angeben, und daß der Master eine Unterbrechung der Datenübertragung vornehmen kann, während der die adressierte Slave-Station adressiert bleibt und nach der der Master ohne erneute Adressierung zwei neue Steuerbits an den adressierten Slave sendet, welche Übertragungsrichtung und Datentart der nachfolgenden Übertragung bis zu deren Beendigung oder bis zu einer erneuten Unterbrechung angeben.

## Beschreibung

Die Erfindung betrifft ein Verfahren zur Übertragung von Daten zwischen zwei Stationen über einen Datenbus, an den mehrere Stationen parallel angeschlossen sind, deren Signale über eine ODER-Funktion auf dem Datenbus verknüpft sind, und der wenigstens zwei Datenleitungen aufweist, wobei wenigstens eine der Stationen als Master-Station und die übrigen Stationen als Slave-Stationen ausgelegt sind sowie eine Station zur Durchführung des Verfahrens.

Es sind verschiedene derartige Datenbussysteme bekannt. In den Geräten der Unterhaltungselektronik hat mittlerweile der sogenannte I²C-Bus weite Verbreitung gefunden, mittels dessen, meist innerhalb eines Gerätes, Befehle und Daten übertragen werden. Dieses Bussystem stößt jedoch an seine Grenzen, wenn relativ große Datenmengen übertragen werden sollen.

Der Erfindung liegt die Aufgabe zugrunde, ein Datenbussystem zu schaffen, welches in der Lage ist, große Datenmengen zu übertragen.

Diese Aufgabe ist erfindungsgemäß dadurch gelöst, daß zwecks Start einer Datenübertragung eine Master-Station eine Slave-Station adressiert und an die Slave-Station zwei Steuerbits sendet, welche die Übertragungsrichtung und die Datenart einer nachfolgenden Datenübertragung zwischen diesen beiden Stationen angeben, und daß der Master eine Unterbrechung der Datenübertragung vornehmen kann, während der die adressierte Slave-Station adressiert bleibt und nach der der Master ohne erneute Adressierung zwei neue Steuerbits an den adressierten Slave sendet, welche Übertragungsrichtung und Datentart der nachfolgenden Übertragung bis zu deren Beendigung oder bis zu einer erneuten Unterbrechung angeben.

Der Erfindung liegt die Erkenntnis zugrunde, daß bei den bekannten Datenbussystemen eine Einschränkung der in einer bestimmten Zeit übertragenen Datenmenge insbesondere dadurch eintritt, daß bei diesen Systemen immer wieder Befehle übertragen werden, welche insbesondere die Adressierung einer anderen Station sowie weitere Informationen nachfolgende Datenübertragung beinhalten. Durch die wiederholte Übertragung dieser Befehle, welche dann meist eine Wortbreite entsprechend der Zahl der Datenleitungen haben, gehen relativ viele Takte für die Taktübertragung verloren, so daß entsprechend weniger Daten übertragen werden können.

Bei dem erfindungsgemäßen Verfahren zur Datenübertragung wird nun eine Slave-Station von einem Master bei Beginn einer Datenübertragung nur einmalig adressiert. Bei nachfolgenden Wechseln der Übertragungsrichtung oder bei einem Wechsel der Datenart wird die Slave-Station nicht wieder neu adressiert. Gleiches gilt für den Fall, daß die Datenübertagung unterbrochen werden soll.

Um der Slave-Station jedoch gleichwohl mitteilen zu können, welche Übertragungsrichtung die nachfolgende Datenübertragung haben soll, ob sie also vom Master zum Slave oder in umgekehrter Richtung verlaufen soll, und welche Datenart die nachfolgenden Daten haben, überträgt der Master nach Beginn einer Datenübertragung oder nach einer Unterbrechung der Datenübertragung Steuerbits, welche diese Informationen beinhalten. Es genügen hierfür zwei Steuerbits.

Durch diese Vorgehensweise werden nicht nur Übertragungstakte für die Übermittlung dieser Informationen eingespart, während der bei der Lösung gemäß der Erfindung bereits Daten übertragen werden können, sondern durch die einfache Umschaltung mittels der Steuerbits entfällt auch in der Slave-Station die Notwendigkeit, die übertragenen Befehle zu entschlüsseln, d.h. also festzustellen, welchen Inhalt die übertragenen Befehle haben. Die Steuerbits können dagegen relativ einfach direkt zur Steuerung eingesetzt werden.

Im Ergebnis kann also bei dem erfindungsgemäßen Verfahren zur Datenübertragung nach Aufnahme einer Datenübertragung und einmaliger Adressierung einer Slave-Station ein beliebig häufiger Wechsel der Übertragungsrichtung zwischen der Master-Station und der adressierten Slave-Station stattfinden. Ferner kann zwischen verschiedenen Datenarten beliebig umgeschaltet werden, ohne daß jeweils eine Neuadressierung der Slave-Station erforderlich ist.

Gemäß einer Ausgestaltung der Erfindung ist für das Verfahren vorgesehen, daß die beiden möglichen Zustände eines ersten der beiden Steuerbits die Übertragungsrichtung der nachfolgenden Datenübertragung zwischen der Master-Station und der adressierten Slave-Station angeben und daß die beiden möglichen Zustände eines zweiten der beiden Steuerbits die Art der nachfolgend übertragenen Daten, insbesondere Befehle oder sonstige Daten, angeben.

Um in einer Slave-Station eine direkte Steuerung von deren Funktion mittels der beiden Steuerbits vornehmen zu können, ist es vorteilhaft, den beiden Bits jeweils eine Funktion zuzuordnen. So gibt der Zustand des ersten der beiden Steuerbits die Übertragungsrichtung und daß zweite der beiden Bits die Datenart der nachfolgenden Datenübertragung an.

In weiteren Ausgestaltungen ist vorgesehen, daß der Datenbus vier Datenleitungen aufweist und daß außer den Datenleitungen eine Taktleitung und eine Steuerleitung vorgesehen sind. Bei dieser Wahl der Leitungen des Bussystems ist einerseits der Leitungsaufwand noch vertretbar, andererseits gestatten vier Datenleitungen bereits eine große Datenmenge zu übertragen.

Für diese Auslegung des Datenbussystems ist ferner vorgesehen, daß die Master-Station zwecks Start einer Datenübertragung zwei Adreßlängenbits und zwei Steuerbits auf den vier Datenleitungen sendet und nachfolgend eine Adresse, deren Länge von den beiden Adreßlängenbits angegeben wird, zwecks Adressierung einer Slave-Station überträgt.

Weist der Datenbus vier Datenleitungen auf, so können mit einem Takt des Bussystems, beispielsweise auf der Taktleitung, vier Bits übertragen werden. Es ist daher vorteilhaft, neben den beiden Steuerbits zwei Adreßlängenbits zu übertragen, welche die Länge einer nachfolgend übertragenen Adresse angeben. Durch diese Maßnahme wird die Datenübertragungskapazität des Datenbussystems weiter erhöht, da für die Übertragung relativ kurzer Adressen auch nur entsprechend wenig Takte des Datenbussystems für deren Übertragung benötigt werden und anschließend sofort wieder Daten übertragen werden können. Es kann also beispielsweise vorteilhaft sein, Stationen, zwischen denen relativ oft Daten übertragen werden, mit Adressen kurzer Länge zu versehen, da deren Übertragung den Bus nur kürzer blockiert.

Da nach einer Unterbrechung der Datenübertragung eine Neuadressierung des Slaves bei dem erfindungsgemäßen Verfahren nicht stattfinden muß, ist in weiterer Ausgestaltung vorgesehen, daß nach einer solchen Unterbrechung ausschließlich die beiden Steuerbits gesendet werden, nach deren Übertragung die Datenübertragung fortgesetzt wird.

Für eine Station zur Durchführung des Verfahrens ist ferner vorgesehen, daß in der Station ein Register zur Speicherung der beiden Steuerbits sowie gegebenenfalls der Adreßlängenbits vorgesehen ist. In einer Master-Station können diese Steuerbits entsprechend der Art der nachfolgenden Datenübertragung in das Register eingelesen und direkt auf das Bussystem gegeben werden. In einer Slave-Station geschieht dies in umgekehrter Weise, d.h. also, die Steuerbits werden über den Bus übertragen und in das Register der Slave-Station eingelesen. Aus diesem Register heraus können die Steuerbits direkt in der Slave-Station zur deren Steuerung eingesetzt werden.

Dies kann vorteilhaft in der Weise geschehen, daß die in das Register eingelesenen Steuerbits über eine nachgeschaltete Steuerlogik eine entsprechende Umschaltung der Funktionen der Slave-Station auslösen.

Wie nach einer weiteren Ausgestaltung der Erfindung vorgesehen ist, können die Adreßlängenbits in der Slave-Station in entsprechender Weise weiterverarbeitet werden, in dem in das Register eingelesene Adreßlängenbits zur entsprechenden Umschaltung eines in der Slave-Station vorgesehenen Adressendekoders eingesetzt werden.

Nachfolgend wird anhand der Zeichnung ein Ausführungsbeispiel der Erfindung näher erläutert. Es zeigen:
Fig. 1 ein zeitliches Ablaufdiagramm für einen erfindungsgemäßen Datenbus, welches den Start einer Datenübertragung darstellt,
Fig. 2 ein Ablaufdiagramm einer Unterbrechung der Datenübertragung,
Fig. 3 ein Ablaufdiagramm des Endes einer Datenübertragung,
Fig. 4 ein Blockschaltbild einer Slave-Station für den erfindungsgemäßen Datenbus.

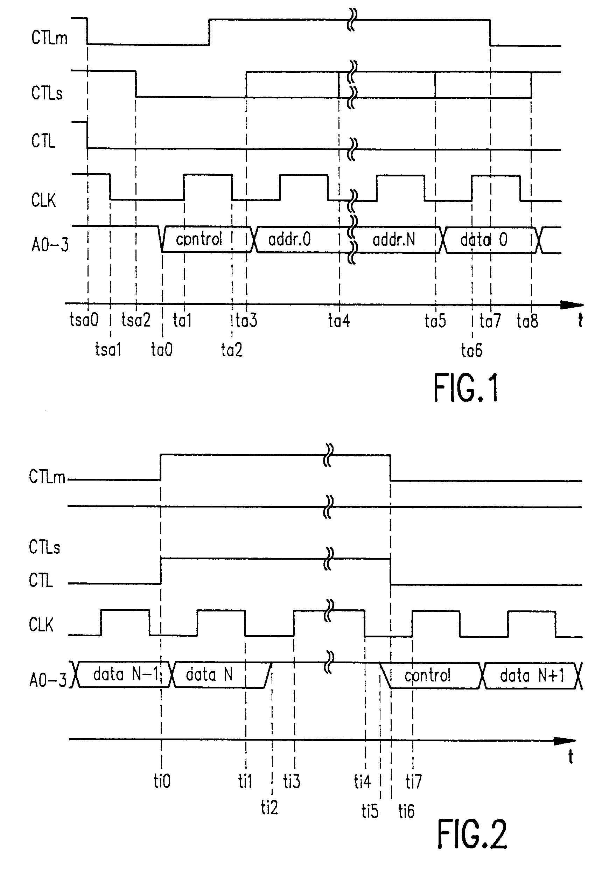

Für die Darstellungen der Fig. 1 bis 4 wird davon ausgegangen, daß der erfindungsgemäße Datenbus vier Datenleitungen A0-3, eine Taktleitung CLK sowie eine Steuerleitung CTL aufweist.

In den Figuren 1 bis 3 sind die Datenleitungen A0-3 gemeinsam dargestellt. Für die Steuerleitung CTL sind die entsprechenden Signale der Master-Station und der Slave-Station getrennt dargestellt. Deren Verknüpfung über eine ODER-Funktion auf dem Datenbus ergibt dann das gemeinsame Signal CTL auf der Steuerleitung. Auch die Signale der übrigen Leitungen des Datenbusses sind über ODER-Funktionen miteinander verknüpft.

In Fig. 1 ist der zeitliche Ablauf für diese fünf Leitungen des Datenbusses aufgetragen, wie er beim Start einer Datenübertragung zwischen einer Master-Station und einer Slave-Station stattfindet.

Der zeitliche Ablauf gemäß Fig. 1 zeigt, daß die Leitungen während der Ruhephase des Busses, wenn also keine Datenübertragung stattfindet, hohen Pegel aufweisen. Zum Zeitpunkt tsa0 wird von dem Master die Steuerleitung CTL auf niedrigen Pegel gesetzt. Nachfolgend wird zum Zeitpunkt tsal die Taktleitung CLK ebenfalls auf niedrigen Pegel gesetzt. Alle Slave-Stationen, die an dem Bus angeschlossen sind, reagieren nun in der Weise, daß sie auf die Steuerleitung CTL ebenfalls ein niedriges Signal geben. Dies ist in der Fig. 1 für alle Slave-Stationen zum Zeitpunkt tsa2 der Fall.

Nachfolgend werden nun für die Aufnahme einer Datenübertragung die Steuerbits, die Adreßlängenbits sowie die Adresse der zu adressierenden Slave-Station übertragen. Dies geschieht in der Weise, daß zum Zeitpunkt ta0 die Master-Station ein Steuer-Wort auf die vier Datenleitungen A0-A3 gibt, welches zwei Steuerbits und zwei Adreßlängenbits beinhaltet. Der Master setzt nun zum Zeitpunkt tal die Taktleitung auf hohen Pegel und zum Zeitpunkt ta2 wieder auf niedrigen Pegel. Zum Zeitpunkt ta2 wird dieses Steuer-Wort von den angeschlossenen Slave-Stationen übernommen. Ferner gibt der Master zwischen den Zeitpunkten ta1 und ta2 die Steuerleitung wieder frei.

Nachfolgend wird in entsprechender Weise die Adresse der Slave-Station übertragen, mit der nachfolgend eine Datenübertragung stattfinden soll. Die Zahl der Adreß-Wörter, die nachfolgend übertragen wird, wird durch die Adreßlängenbits in dem Steuer-Wort angegeben. Diejenigen Slave-Stationen, die bereits aufgrund der Adreßlängenbits erkennen, daß die nachfolgend übertragene Adreßlänge nicht mit der ihrigen übereinstimmt, können bereits vorher aus der Datenübertragung aussteigen.

Dies kann zum Zeitpunkt ta3 stattfinden. Zu den Zeitpunkten ta4 bzw. ta5 steigen diejenigen Slave-Stationen aus, deren eigene Adresse nicht mit der übertragenen Adresse übereinstimmt. Die Slave-Stationen, welche aus der Datenübertragung aussteigen, geben ihrerseits die Steuerleitung CTL frei.

Da die Master-Station ihrerseits die Steuerleitung CTL freigegeben hatte, kann sie anhand des Zustands der Steuerleitung CTL erkennen, ob eine Slave-Station die Steuerleitung noch auf niedrigen Pegel hält. Die Master-Station zieht die Steuerleitung wieder auf niedrigeren Pegel zu einem Zeitpunkt ta7, zu dem das erste Datenwort übertragen wird. Die adressierte Slave-Station gibt die Steuerleitung nach der abfallenden Flanke des Taktsignals CLK, mit dem dieses erste Datenwort übertragen wird, frei (Zeitpunkt ta8).

Auf diese Weise hat die Steuerleitung CTL während der gesamten Übertragung vom Beginn bis zum Ende und ebenfalls während einer Unterbrechung der Übertragung immer niedrigen Pegel. Die Master-Station hat damit die Möglichkeit, einen nicht erfolgreichen Adressierungsversuch frühzeitig abzubrechen, was sie daran erkennen kann, daß alle Slaves die Steuerleitung CTL bereits freigegeben haben, während der Master seinerseits die Kontrolleitung ebenfalls noch freigibt. Dies ist ein Zeichen dafür, daß sich keine Slave-Station mehr angesprochen fühlt. Der Master wiederholt in diesem Falle den Adressierungsversuch.

Fig. 2 zeigt nun nachfolgend eine Datenübertragung von Datenwörtern N-1 und N sowie eine Unterbrechung der Datenübertragung, nach welcher ein neues Steuerwort übertragen wird, dem wieder weitere Datenwörter nachfolgen, von denen in der Fig. 2 nur das Datenwort N+1 symbolisch dargestellt ist.

Während der Datenübertragung hat die Steuerleitung CTL niedrigen Pegel und mit jeder negativen Flanke des Signals auf der Taktleitung CLK wird ein neues Datenwort übernommen. Diesen Ablauf zeigt Fig. 2 für das Datenwort N-1.

In der Darstellung gemäß Fig. 2 wird nun davon ausgegangen, daß nach dem Datenwort N eine Unterbrechung der Datenübertragung stattfinden soll. Dies wird von der Master-Station dadurch signalisiert, daß zum Zeitpunkt ti0, also bevor das Datenwort N auf die Datenleitungen A0-3 gelegt wird, die Steuerleitung CTL freigegeben wird. Da die adressierte Slave-Station die Steuerleitung ebenfalls freigegeben hat, geht die Steuerleitung zum Zeitpunkt ti0 auf hohen Pegel über. Dies ist für die adressierte Slave-Station das Signal, daß nach dem Datenwort N, also nach dem nächsten Datenwort eine Unterbrechung der Datenübertragung stattfinden soll. Gemäß der Darstellung in Fig. 2 ist zum Zeitpunkt ti2 das letzte Datenwort N übertragen worden. Zum Zeitpunkt ti3 gibt der Master die Taktleitung CLK frei, die nunmehr auf hohem Pegel bleibt. Die Datenübertragung ist nun unterbrochen. Die adressierte Slave-Station bleibt jedoch adressiert.

Zur Wiederaufnahme der Datenübertragung zieht die Master-Station die Taktleitung CLK wieder auf niedrigeren Pegel (Zeitpunkt ti4). Die Master-Station legt ein neues Steuer-Wort auf die Datenleitungen A0-A3, was nun jedoch ausschließlich die beiden Steuerbits enthält. Dieses Steuerwort enthält nicht mehr die Adreßlängenbits, da die adressierte Slave-Station während der Unterbrechung der Datenunterbrechung adressiert blieb und somit nicht neu adressiert werden muß. Zum Zeitpunkt ti6 zieht der Master die Steuerleitung CTL wieder auf niedrigeren Pegel. Mit der nächsten negativen Flanke des Taktsignals CLK wird das Steuerwort von der Slave-Station übernommen. Nach dem Steuerwort findet eine Datenübertragung in gewohnter Weise statt.

Diese Art der Unterbrechung hat den Vorteil, daß nachfolgend die adressierte Slave-Station nicht neu adressiert werden muß. Ferner kann nach einer Übertragung durch entsprechendes Setzen der beiden Steuerbits in dem Kontrollwort die Richtung der nachfolgenden Datenübertragung neu gewählt werden. Durch diese Bits kann signalisiert werden, welcher Art die nachfolgenden Daten sind. Eine solche Unterbrechung kann selbstverständlich gewünschtenfalls mehrfach stattfinden.

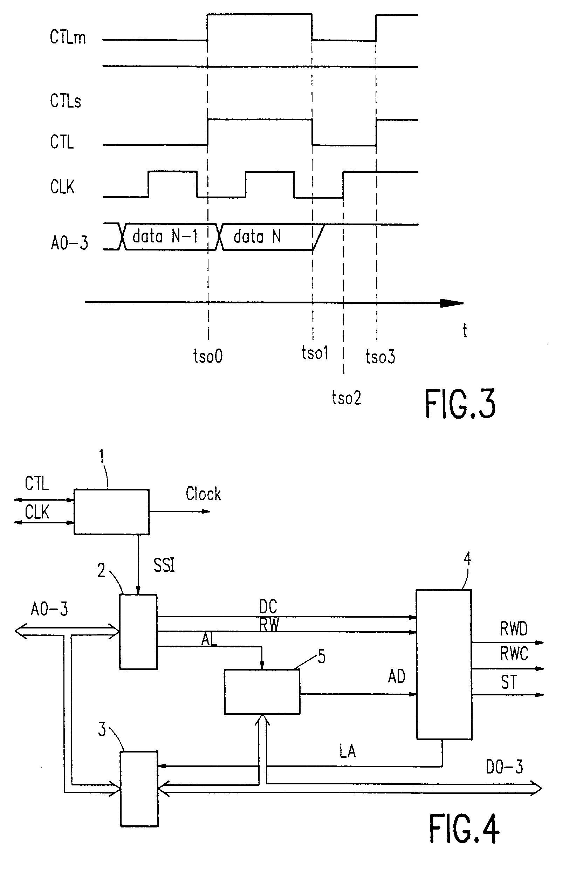

Erst wenn die Datenübertragung zwischen dem Master und der adressierten Slave-Station endgültig abgebrochen werden soll, wird ein Endezyklus gemäß Fig. 3 von der Master-Station durchgeführt. Dazu wird zu einem Zeitpunkt tso0 vor Übertragung des letzten zu übertragenden Datenwortes N (Fig. 2) die Steuerleitung CTL vom Master freigegeben, so daß die Steuerleitung ab diesem Zeitpunkt hohen Pegel hat. Nach der negativen Flanke des Taktsignals CLK, mit der das letzte zu übertragende Datenwort N übertragen wurde, zieht der Master die Steuerleitung zum Zeitpunkt tso1 wieder auf niedrigen Pegel. Dies ist für die angeschlossene Slave-Station das Signal, daß die Datenübertragung nunmehr abgebrochen werden soll. Zum nachfolgenden Zeitpunkt tso2 gibt der Master die Taktleitung wieder frei, die nachfolgend hohen Pegel hat. Nach dem Zeitpunkt tso2 gibt der Master ferner zu einem Zeitpunkt tso3 die Steuerleitung frei, welche nachfolgend ebenfalls hohen Pegel hat. Es sind nunmehr alle Leitungen des Bussystems sowohl von der Master-Station wie auch von der zuvor adressierten Slave-Station freigegeben, so daß alle Leitungen des Bussystems hohen Pegel haben.

In Fig. 4 ist ein Blockschaltbild einer Slave-Station dargestellt, wie sie in dem erfindungsgemäßen Datenbussystem bzw. dem erfindungsgemäßen Verfahren zur Übertragung von Daten vorteilhaft eingesetzt werden kann.

Die Slave-Station gemäß Fig. 4 weist einen Detektor 1 auf, dem die Taktleitung CLK sowie die Steuerleitung CTL des Bussystems zugeführt sind. Über diesen Detektor kann die Slave-Station einerseits die auf diesen beiden Leitungen herrschenden Pegel erkennen, kann sie über den Detektor aber auch beeinflussen. In dem Detektor 1, der auch das Taktsignal für die weiteren Schaltungseinheiten der Slave-Station gemäß Fig. 4 liefert, wird insbesondere detektiert, wann eine Start-Situation vorliegt, wann also eine Master-Station eine Datenübertragung aufnehmen will, ferner, wann eine Stopbedingung einer stattfindenden Datenübertragung vorliegt, sowie, wann eine Unterbrechung einer stattfindenden Datenübertragung mit einer Master-Station durch diese angekündigt wird.

Das Register 1 gibt ein entsprechendes Signal SSI an ein Register 2, in welchem über die Datenleitungen A0-3 ankommende Steuerworte, welche die Steuerbits und die Adreßlängenbits enthalten, gespeichert werden. Ferner ist in der in Fig. 4 dargestellten Slave-Station ein weiteres Register 3 vorgesehen, in welchem die über die Datenleitungen A0-A3 ankommenden Daten zwischengespeichert werden oder in welchem die zu sendenden Daten zwischengespeichert werden.

Wird zu Beginn einer Datenübertragung in das Register 2 ein Steuerwort eingelesen, so werden die beiden in dem Steuerwort enthaltenden Steuerbits in einer Steuerlogik 4 entsprechend ausgewertet. Ein Steuerbit liefert die Information über die Richtung der nachfolgenden Datenübertragung. Dieses Signal ist in der Fig. 4 mit RW bezeichnet. Ein weiteres Steuerbit liefert Informationen über die Art der übertragenen Daten, dieses Signal ist in der Fig. 4 mit DC bezeichnet. Entsprechend diesen beiden Signalen wird von der Steuerlogik 4 einerseits das Register 3 gesteuert, andererseits gibt die Steuerlogik ihrerseits Steuersignale an eine in der Fig. nicht dargestellte Einheit, welche über die in Fig. 4 dargestellte Slave-Station und den Datenbus kommuniziert. Die entsprechenden Signale sind in der Fig. mit RWD, RWC und ST bezeichnet. Diese Signale signalisieren der nicht dargestellten Einheit insbesondere die Übertragungsrichtung und die Art der Daten.

In das Register 2 werden zu Beginn einer Datenübertragung ferner die Adreßlängenbits eingelesen, welche an einen Adressendekoder 5 geliefert werden, in welchem eine über den Datenbus ankommende Adresse, welche in das Register 3 eingelesen wird, dekodiert wird. Der Adreßdekoder 5 dekodiert diese Adresse und gibt ein entsprechendes Signal AD an die Steuerlogik 4, welche aus dem Signal erkennt, ob die Slave-Station adressiert wurde und nachfolgend an einer Datenübertragung teilnimmt. Nach Ablauf des Adressierungsvorganges und der Auswertung der Steuerbits wird bei einer nachfolgenden Datenübertragung die Daten in dem Register 3 jeweils zwischengespeichert.

Nach einer Unterbrechung werden neue Steuerbits in das Register 2 eingelesen, die wiederum durch die Steuerlogik 4 ausgewertet werden. Nachfolgend ändert dann die Slave-Station entsprechend den Steuerbits die Übertragungsrichtung. Ferner wird die Art der übertragenen Daten durch eines der Steuerbits erkannt.

Bei der in Fig. 4 dargestellten Slave-Station zeigt sich unmittelbar der Vorteil der Steuerbits, welche nicht erst dekodiert werden müssen, sondern welche unmittelbar durch die Steuerlogik 4 ausgewertet werden. Entsprechend den Steuerbits kann also die Slave-Station unmittelbar umgeschaltet werden.

## Patentansprüche

1. Verfahren zur Übertragung von Daten zwischen zwei Stationen über einen Datenbus, an den mehrere Stationen parallel angeschlossen sind, deren Signale über eine ODER-Funktion auf dem Datenbus verknüpft sind, und der wenigstens zwei Datenleitungen aufweist, wobei wenigstens eine der Stationen als Master-Station und die übrigen Stationen als Slave-Stationen ausgelegt sind,
dadurch gekennzeichnet, daß zwecks Start einer Datenübertragung eine Master-Station eine Slave-Station adressiert und an die Slave-Station zwei Steuerbits sendet, welche die Übertragungsrichtung und die Datenart einer nachfolgenden Datenübertragung zwischen diesen beiden Stationen angeben, und daß der Master eine Unterbrechung der Datenübertragung vornehmen kann, während der die adressierte Slave-Station adressiert bleibt und nach der der Master ohne erneute Adressierung zwei neue Steuerbits an den adressierten Slave sendet, welche Übertragungsrichtung und Datentart der nachfolgenden Übertragung bis zu deren Beendigung oder bis zu einer erneuten Unterbrechung angeben.

2. Verfahren nach Anspruch 1,
dadurch gekennzeichnet, daß die beiden möglichen Zustände eines ersten der beiden Steuerbits die Übertragungsrichtung der nachfolgenden Datenübertragung zwischen der Master-Station und der adressierten Slave-Station angeben und daß die beiden möglichen Zustände eines zweiten der beiden Steuerbits die Art der nachfolgend übertragenen Daten, insbesondere Befehle oder sonstige Daten, angeben.

3. Verfahren nach Anspruch 1 oder Anspruch 2,
dadurch gekennzeichnet, daß der Datenbus vier Datenleitungen aufweist.

4. Verfahren nach einem der Ansprüche 1 bis 3,
dadurch gekennzeichnet, daß der Datenbus außer den Datenleitungen eine Taktleitung und eine Steuerleitung aufweist.

5. Verfahren nach Anspruch 3,
dadurch gekennzeichnet, daß die Master-Station zwecks Start einer Datenübertragung zwei Adreßlängenbits und zwei Steuerbits auf den vier Datenleitungen sendet und nachfolgend eine Adresse, deren Länge von den beiden Adreßlängenbits angegeben wird, zwecks Adressierung einer Slave-Station überträgt.

6. Verfahren nach Anspruch 5,
dadurch gekennzeichnet, daß nach einer Unterbrechung der Datenübertragung ausschließlich die beiden Steuerbits gesendet werden, nach deren Übertragung die Datenübertragung fortgesetzt wird.

7. Station zur Durchführung des Verfahrens nach einem der Ansprüche 1 bis 6,
dadurch gekennzeichnet, daß in der Station ein Register zur Speicherung der beiden Steuerbits sowie ggf. der Adreßlängenbits vorgesehen ist.

8. Slave-Station nach Anspruch 7,
dadurch gekennzeichnet, daß die in das Register eingelesenen Steuerbits über eine nachgeschaltete Steuerlogik eine entsprechende Umschaltung der Funktion der Slave-Station auslösen.

9. Slave-Station nach Anspruch 7 oder Anspruch 8,
dadurch gekennzeichnet, daß in das Register eingelesene Adreßlängenbits zur entpsrechenden Umschaltung eines in der Slave-Station vorgesehenen Adressen-Dekoders eingesetzt werden.
